# EUROPEAN PATENT APPLICATION

(11) **EP 4 617 980 A1**
(43) Date of publication of application: **17.09.2025**
(21) Application number: 24382263.2
(22) Date of filing: 12.03.2024
(51) Int. Cl.: G06Q 20/32, H04W 4/80

(54) **CONNECTING A USER OF A PORTABLE DATA CARRIER WITH A WEBSITE OF A PROVIDER OF THE PORTABLE DATA CARRIER**

(71) Applicant: Giesecke+Devrient ePayments GmbH, 81677 München (DE)
(72) Inventor: FERNANDEZ, Oscar Miguel, 08820 El Prat de Llobregat (Barcelona) (ES); TARANTINO, Thomas, 81677 Munich (DE)
(74) Representative: LKGLOBAL Lorenz & Kopf Patentanwalt Attorney at Law PartG mbB

(57) **Abstract**

The present invention relates to a method to connect a mobile communication device (2) of a user with a portable data carrier (2) of the user and a provider (6) of the portable data carrier (2) to display a website of the provider (6) on a screen (26) of the mobile communication device (4), whereby a first contactless communication (8) is used between the portable data carrier (2) and the mobile communication device (4) and whereby a second contactless communication (10) is used between the mobile communication device (4) and the provider (6) of the portable data carrier (2).

## Description

The present invention relates to a method for connecting a user of a portable data carrier with a website of a provider of the portable data carrier by means of a mobile device.

### BACKGROUND OF THE INVENTION

Card shaped data carriers are widely used in a variety of systems such as payment cards, bank cards, credit cards, access cards, identity cards to provide identification, authentication, payment, access etc. These card shaped data carriers comprise typically a chip having an interface which may be contact based and/or contact less.

Card issuers e.g. financial institutes, like a bank, send a new card, e.g. a banking card usually be means of a letter to a customer. The letter typically comprises beside the new card a written communication. On the written communication or on the new card for example a QR code is added from the card issuer. The QR code enables the customer to connect with the website of the card issuer by scanning the QR code e.g. with a camera of a mobile phone of the customer. On the website of the card issuer new customers of the card are e.g. welcomed or existing customers are informed about e.g. new functions of the card, etc.

In that cases the camera of the mobile phone requires to be focused on the QR code to be able to read the QR code and to address the customer to the website of the card issuer. This may be a problem for persons having a visual impairment e.g. blind persons, as they can hardly see whether the camera is focused on the QR code, let alone persons having a visual impairment even can not see whether there is provided a QR code.

It is therefore desirable to provide a solution especially for persons having a visual constraint which address the above-mentioned drawbacks.

### SUMMARY OF THE INVENTION

The present invention addresses the above object by the subject-matter covered by the independent claim. Preferred embodiments of the invention are defined in the dependent claims.

The invention provides a method to connect a mobile communication device of a user with a portable data carrier of the user and a provider of the portable data carrier to display a website of the provider on a screen of the mobile communication device, whereby a first contactless communication is used between the portable data carrier and the mobile communication device and whereby a second contactless communication is used between the mobile communication device and the provider of the portable data carrier.

The advantage of the invention is e.g, that a user of a portable data carrier, e.g. a customer of a bank, just has to keep his mobile communication device next to the portable data carrier to create a connection with the website of the provider of the data carrier, e.g. a bank institute, without the need to see where e.g. a QR code is applied, e.g. on the portable data carrier or on a letter of the provider of the portable data carrier. It is enough to keep the portable data carrier next to or in a close vicinity to the mobile communication device. The communication between the portable data carrier and the mobile communication device is initiated automatically in a contactless way. The communication between the mobile communication device and the provider of the portable data carrier is also created automatically over e.g. a mobile communication network. So, the present invention e.g. facilitates especially for persons having a visual impairment, e.g. blind persons, to connect with a provider of a portable data carrier, e.g. a bank, just by keeping the portable data carrier, e.g. a banking card, next to their mobile communication device.

An advantageous embodiment of the method is that the portable data carrier comprises a chip having a contactless interface to exchange data with the mobile communication device via the first contactless communication.

The advantage is that the contactless interface of the portable data carrier enables a contactless communication between the portable data carrier and the mobile communication device. This is essential for the invention to conduct an easy and reliable communication and data transfer between the portable data carrier and the mobile communication device.

An advantageous embodiment of the method is that the chip comprises a first data storage area which is an encrypted storage area whereby the stored data of the first data storage area is only accessible after providing a code and a second data storage area which is a not encrypted data storage area, whereby the stored data of the second data storage area is freely accessible.

The advantage is that sensitive data can be kept secret by storing them in the first storage area. Sensitive data are only accessible after providing a code, e.g. a pin or password to get access to this first data storage area. Data which is not sensitive and shall be readable by external parties is stored in the second storage area, so that external parties may access these not sensitive data without any effort. The chip having the first and the second storage area is for example a secure element.

An advantageous embodiment of the method is that in the first storage area or in the second storage area a data unit is stored which data unit is read by the mobile communication device (4).

The advantage of the first storage area is that the data unit is protected against unauthorized access.

The advantage of the second storage area is that external devices may easily access the stored data unit e.g. if they want to get connected with the website of the provider. There is no code or password necessary to get access to the second storage area.

The data unit itself may have any appropriate data format and data content to provide e.g. disclosing an information to find the website of the provider or any other appropriate information or content.

An advantageous embodiment of the method is that the mobile communication device has a first communication interface for the first communication between the mobile communication device and the portable data carrier and a second communication interface for the second communication between the mobile communication device and the provider of the portable data carrier.

The advantage is that data is transferred in a contactless way in the first and the second communication which facilitates the use of the invention for a user of the contactless data carrier.

An advantageous embodiment of the method is that after establishing the first communication with the portable data carrier the mobile communication device reads the data unit in the second storage area of the chip of the portable data carrier to create the second communication to display the website of the provider of the portable data carrier on the screen of the mobile communication device.

The advantage is that the mobile communication device reads in the second storage area of the portable data carrier automatically the data unit to connect with the website of the provider of the portable data carrier. Therefore, after reading the data unit the communication with the website of the provider of the portable data carrier is automatically initiated by the mobile communication device such that the user may get access to the corresponding website. The website may be shown on the screen or display of the mobile device or an any other appropriate device.

An advantageous embodiment of the method is that the first communication between the portable data carrier and the mobile communication device is according to the Near Field Communication Standard.

The advantage is that the Near Field Communication Standard is a proven standard for data transfer in a close position between the portable data carrier and the mobile communication device. All other appropriate methods for a data transfer may also be used for the data transfer between the portable data carrier and the mobile communication device.

An advantageous embodiment of the method is that the data unit is according to the standardized Near Field Communication Data Exchange Format specification.

The advantage is that a data unit, e.g. a macro, according to the Near Field Communication (NFC) Data Exchange Format (NDEF) can be read and applied by any device able to use the NFC Standard without the need to use an additional application to create a connection with the website of the provider of the portable data carrier. This makes the application of the invention easy and reliable.

An advantageous embodiment of the method is that the data unit is an Uniform Resource Locator (URL) of the website of the provider of the portable data carrier.

The advantage is that the address of the website is provided by the Uniform Resource Locator (URL) disclosing the internet address of the website which may be easily used to create the connection with the provider of the portable data carrier.

An advantageous embodiment of the method is that the mobile communication device comprises an application controlling the reading of the data unit in the second storage area of the portable data carrier and controlling the second communication with the provider of the portable data carrier.

The advantage is that the application, e.g. a banking app, takes care of the communication between the portable data carrier and mobile communication device. The application controls the reading of the data unit, e.g. the Uniform Resource Locator URL, to establish and control the communication with the provider of portable data carrier. There is no need for an internal application of the mobile communication device to take care of this communication. Further, the application may advantageously be maintained by the provider of the portable data carrier to update the data and communication according to their own priorities and necessities.

An advantageous embodiment of the method is that the portable data carrier is a chip card.

The advantage is that the portable data carrier may be realized as a chip card, e.g. bank card, credit card, etc. Any other appropriate use case of the portable data carrier is possible.

An advantageous embodiment of the method is that the mobile communication device has a Near Field Communication interface.

The advantage is that any appropriate mobile communication device having a Near Field Communication interface, e.g. mobile phone, tablet computer, laptop or any other appropriate device, may be used as a mobile communication device for the use of the present invention.

Further aspects, features and advantages of the present invention will become apparent to those of ordinary skills in the art upon reviewing the following detailed description of preferred embodiment and variants of the present invention in conjunction with the accompanying figure.

### BRIEF DESCRIPTION OF THE DRAWINGS

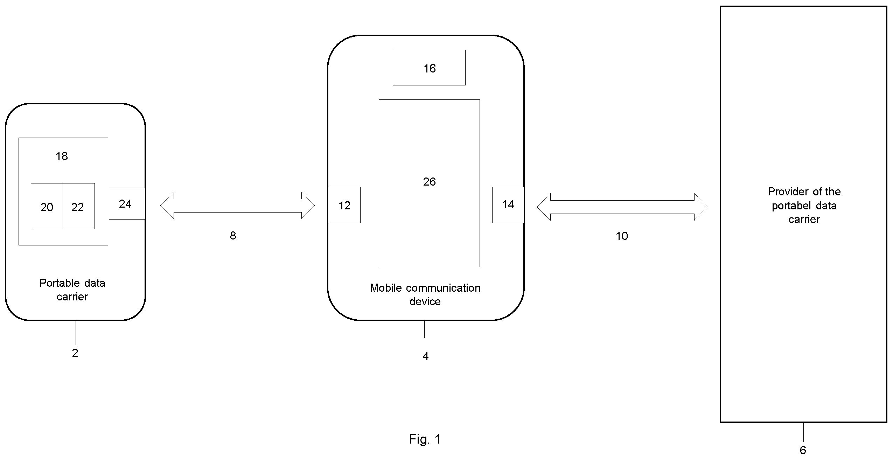

Reference will now be made to the accompanying figure, in which
FIG. 1 shows the communication between the portable data carrier, the mobile communication device and the provider of the portable data carrier according to the present invention.

### DETAILED DESCRIPTION

Detailed explanations of the present invention are given below with reference to the attached drawing that illustrate a specific embodiment example of the present invention. This embodiment is described in sufficient detail to enable those skilled in the art to practice the invention. It is to be understood that the disclosed various embodiments of the present invention, although different, are not necessarily mutually exclusive. For example, a particular feature, structure, or characteristic described herein in connection with one embodiment may be implemented within other embodiments without departing from the scope of the present invention. In addition, it is to be understood that the position or arrangement of individual elements within each disclosed embodiment may be modified without departing from the scope of the present invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

Figure 1 shows the communication between the portable data carrier 2, the mobile communication device 4 and the provider 6 of the portable data carrier 2 according to the present invention.

The principle of the invention is that the mobile communication device 4 reads contactless a data unit stored in the portable data carrier 2 to connect with the provider 6 of the portable data carrier 2 to display a website of the provider 6 on a screen 26 of the mobile communication device 4. This invention is especially advantageous for persons having a visible impairment for cases e.g. when they try to connect with a website of the provider 6, e.g. a bank, of the portable data carrier, then they just have to put the portable data carrier 2 next to their mobile communication device 4 to get the website of the provider 6 displayed on the screen 26 of their mobile communication device. In contrast to the state of the art there is no need e.g. to focus a camera of the mobile communication device 4 on e.g. a QR code on a letter or on the portable data carrier 2 which may be a problem for persons having a visible impairment.

As soon as the portable data carrier 2 is in a close position with the mobile communication device 4 a first contactless communication 8 is established by the mobile communication device 4 between the portable data carrier 2 and the mobile communication device 4. The first contactless communication 8 is preferably based on the Near Field Communication (NFC) standard, but any other appropriate contactless communication standard may also be used.

The mobile communication device 4 has a first communication interface 12 and the portable data carrier has a contactless communication interface 24 for the first communication 8. Further, the mobile communication device 4 has a second communication interface 14 to communicate with the provider 6 via the second communication 10, e.g. a mobile communication network.

The chip 18 is connected with the contactless communication interface 24. Further, the portable data carrier 2 provides a chip 18 having two separate data storage areas 20 and 22. First data storage area 20 is an encrypted storage area whereby the stored data is only accessible after providing a code or password or key or anything else to get access to the first storage area 20. Second data storage area 22 is a not encrypted data storage area, whereby the stored data is freely accessible for external parties without the need to provide e.g. a password, code, key or anything else to get access to the second data storage area 22 to read and write data. In general the data unit may be stored in the first storage area or in the second storage area.

In a preferred embodiment the data unit is stored in the second storage area 22 whereby the data unit discloses e.g. an information to find the website of the provider 6 of the portable data carrier 2. The data unit is freely accessible in the second storage area 22 for any external party. The data unit itself may have any appropriate data format or data standard or data content.

In a preferred embodiment, which is not shown in Figure 1, the data unit is according to the standardized Near Field Communication (NFC) Data Exchange Format specification. This has the advantage that any device, e.g. here the mobile communication device 4, able to communicate via a NFC protocol can control the first communication 8 to read the data unit via the first communication 8 and create and control the second communication 10 with the provider 6 to display the website on the screen 26 of the mobile communication device 4 without any support of an additional application. So, in this preferred embodiment the shown application 16 of Figure 1 is not necessary.

In Figure 1 is shown another preferred embodiment, i.e. where the application 16 is necessary whereby the application 16 in the mobile communication device 4 is used to control the first and second communication 8 and 10, i.e. to read the data unit in the second storage area 22 and to communicate with the provider 6 to display the website of the provider 6 on the screen 26 of the mobile communication device 4. An example for such a use case is when the data unit provides e.g. a Uniform Resource Locator (URL) of the website of the provider 6 where in contrast to the above mentioned example of the NFC Data Exchange Format the application 16 is necessary for the communication 8 and 10 to control the reading of the data unit in the second storage area 22 and to communicate with the provider 6 to display the website on the screen or display 26 of the mobile communication device 4 via the second communication 10. The application 16 has the advantage that no internal process of the mobile communication device has to be used to control the first and second communication 8 and 10. Further, the application 16 can be included in an application of the provider 6, e.g. in a banking application, where the provider 6 is responsible e.g. for the maintenance of the application 16.

The portable data carrier 2 may be e.g. a chip card, like a bank card, credit card, wearable or any other appropriate portable data carrier.

The mobile communication device 4 has a Near Field Communication interface e.g. a mobile phone, a laptop, notepad or any other appropriate mobile communication device.

In the foregoing specification, the invention has been described with reference to specific embodiments thereof. It will, however, be evident that various modifications and changes may be made thereto without departing from the broader scope of the invention. The specification and drawing are, accordingly, to be regarded in an illustrative rather than restrictive sense.

### List of reference signs

- 2: Portable data carrier
- 4: Mobile communication device
- 6: Provider of the portable data carrier 2
- 8: First contactless communication between portable data carrier 2 and mobile communication device 4
- 10: Second contactless communication between mobile communication device 4 and provider of the portable data carrier 6
- 12: First communication interface of the mobile communication device 4
- 14: Second communication interface of the mobile communication device 4
- 16: Application of the mobile communication device 4
- 18: Chip of the portable data carrier 2
- 20: First data storage area of the chip 2 which is an encrypted storage area
- 22: Second data storage area of the chip 2 which is a not encrypted storage area
- 24: Contactless interface of the portable data carrier 2 to exchange data with the mobile communication device 4 via the first communication 8
- 26: Screen of the mobile communication device 4

## Claims

1. Method to connect a mobile communication device (2) of a user with a portable data carrier (2) of the user and a provider (6) of the portable data carrier (2) to display a website of the provider (6) on a screen (26) of the mobile communication device (4),
whereby a first contactless communication (8) is used between the portable data carrier (2) and the mobile communication device (4) and
whereby a second contactless communication (10) is used between the mobile communication device (4) and the provider (6) of the portable data carrier (2).

2. Method according to claim 1, **characterized in that** the portable data carrier (2) comprises a chip (18) having a contactless interface (24) to exchange data with the mobile communication device (4) via the first contactless communication (8).

3. Method according to claim 2, **characterized in that** the chip (18) comprises
a first data storage area (20) which is an encrypted storage area whereby the stored data of the first data storage area (20) is only accessible after providing a code and
a second data storage area (22) which is a not encrypted data storage area, whereby the stored data of the second data storage area (22) is freely accessible.

4. Method according to claim 3, **characterized in that** in the first storage area (20) or in the second storage area (22) a data unit is stored which data unit is read by the mobile communication device (4).

5. Method according to any of the claims 1 to 4, **characterized in that** the mobile communication device (4) has
a first communication interface (12) for the first communication (8) between the mobile communication device (4) and the portable data carrier (2) and
a second communication interface (14) for the second communication (10) between the mobile communication device (4) and the provider (6) of the portable data carrier (2).

6. Method according to claim 5, **characterized in that** after establishing the first communication (8) with the portable data carrier (2) the mobile communication device (4) reads the data unit in the second storage area (22) of the chip (18) of the portable data carrier (2) to create the second communication (10) to display the website of the provider (6) of the portable data carrier (2) on the screen (26) of the mobile communication device (4)

7. Method according to any of the claims 1 to 6, **characterized in that** the first communication (8) between the portable data carrier (2) and the mobile communication device (4) is according to the Near Field Communication Standard.

8. Method according to any of the claims 1 to 7, **characterized in that** the data unit is according to the standardized Near Field Communication Data Exchange Format specification.

9. Method according to any of the claims 1 to 7, **characterized in that** the data unit is an Uniform Resource Locator of the website of the provider (6) of the portable data carrier (6).

10. Method according to claim 9, **characterized in that** the mobile communication device (4) comprises an application (16) controlling the reading of the data unit in the second storage area (22) of the portable data carrier (2) and controlling the second communication (10) with the provider (6) of the portable data carrier (2).

11. Method according to any of the claims 1 to 10, **characterized in that** the portable data carrier (2) is a chip card.

12. Method according to any of the claims 1 to 11, **characterized in that** the mobile communication device (4) has a Near Field Communication interface.
